# EUROPÄISCHE PATENTSCHRIFT

(11) **EP 0 928 888 B1**
(45) Veröffentlichungstag und Bekanntmachung des Hinweises auf die Patenterteilung: **23.10.2002**
(21) Anmeldenummer: 98123549.2
(22) Anmeldetag: 09.12.1998
(51) Int. Cl.: F02B 63/06, F02B 67/04

(54) **Verfahren zur Verminderung von Getriebegeräuschen bei zahnradgetriebenen Luftpressern von Brennkraftmaschinen**
Process for reducing drive noise from gear driven compressors of combustion engines
Procédé pour la réduction de bruit des compresseurs pour moteurs à combustion

(30) Priorität: 09.01.1998 DE 19800587
(43) Veröffentlichungstag der Anmeldung: 14.07.1999
(73) Patentinhaber: MAN NUTZFAHRZEUGE AG, 80995 München (DE)
(72) Erfinder: Möller, Heribert, Dipl.-Ing., 91623 Sachsen (DE); Hollweck, Johannes, Dipl.-Ing., 92237 Sulzbach-Rosenberg (DE)

(56) Entgegenhaltungen:
- EP-A- 0 495 221
- DE-A- 3 616 672
- DE-A- 3 804 575
- DE-A- 3 809 466
- PATENT ABSTRACTS OF JAPAN vol. 010, no. 115 (M-474), 30. April 1986 (1986-04-30) & JP 60 247011 A (NIPPON SEIKO KK), 6. Dezember 1985 (1985-12-06)

## Beschreibung

Die Erfindung bezieht sich auf eine Vorrichtung zur Verminderung von Getriebegeräuschen bei zahnradgetriebenen Luftpressem von Brennkraftmaschinen gemäß dem Gattungsbegriff des Patentanspruches 1.

Aus DE 38 04 575 A1 ist ein Verfahren zur Verminderung von Getriebegeräuschen bei zahnradgetriebenen Luftpressern von Brennkraftmaschinen bekannt, bei dem eine bestimmte drehwinkelorientierte Zuordnung von einem Ritzel zum Antrieb einer Kurbelwelle des Luftpressers zu einem Nockenwellenzahnrad vorgesehen ist, um auftretende negative Drehmomente der Kurbelwelle des Luftpressers durch gleichzeitig auftretende positive Drehmomente der Nockenwelle zu kompensieren. Dadurch wird das sehr geräuschintensive Aufeinanderschlagen der Zahnflanken am Ritzel gemindert. Eine weitere Minderung des Getriebegeräusches tritt dadurch ein, daß an die Kurbelwelle neben dem Ritzel noch ein Verbraucher in Form einer Hydraulikpumpe für eine hydraulische Lenkhilfe angeschlossen ist. Ein Nachteil dieses Verfahrens ist darin zu sehen, daß die Hydraulikpumpe nur dann ein Drehmoment aufnimmt, wenn gerade ein Lenkvorgang ausgeführt wird, was jedoch nur sporadisch der Fall ist.

Aus DE 36 16 672 A1 ist es ferner bekannt, mit der Kurbelwelle des Luftpressers noch drei weitere Hydraulikpumpen drehmomentschlüssig zu verbinden. Eine der Hydraulikpumpen ist mit dem freien Ende der Kurbelwelle verbunden, während die beiden anderen Hydraulikpumpen mit dem antriebsseitigen Ende der Kurbelwelle in Reihe hintereinander geschaltet verbunden sind. Ein Nachteil dieser Anordnung ist darin zu sehen, daß beispielsweise die Lichtmaschine nicht miteingeschaltet ist, so daß diese als Drehmomentabnehmer entfällt. Die Wahrscheinlichkeit, daß nicht genügend Drehmoment abgenommen wird ist also höher und damit wird auch das geräuschverursachende Zahnflankenschlagen wahrscheinlicher. Zudem ist die Reihenschaltung der drei Hydraulikpumpen in Fahrzeugmotoren aus Platzgründen kaum realisierbar. Der Erfindung liegt die Aufgabe zugrunde, die Kurbelwelle des Luftpressers ständig mit einem Drehmoment zu belasten, um ein Abheben und nachfolgendes Aufeinanderschlagen der Zahnflanken des Ritzels in allen Fällen zu vermeiden.

Erfindungsgemäß wird diese Aufgabe zum einen durch die kennzeichnenden Merkmale des Patentanspruches 1 gelöst.

Die Riemenscheibe mit Lagerung kann als bauliche Einheit mit geringem Montageaufwand unmittelbar mit der Kurbelwelle verbunden werden und nimmt ständig Drehmomente ab.

Die Aufgabe kann zum anderen durch die kennzeichnenden Merkmale des Patentanspruches 2 gelöst werden.

Dadurch, daß die Riemenscheibe für den Antrieb von Nebenantrieben wie Lichtmaschine, Kühlmittelpumpe etc. direkt auf der Spindel der Hydraulikpumpe angeordnet ist, ergibt sich eine äußerst preiswerte und raumsparende Lösung, was besonders bei Brennkraftmaschinen von Nutzfahrzeugen von großer Bedeutung ist.

Für den Fall, daß das Moment des Drehmomentabnehmers relativ klein ist, kann der Drehmomentabnehmer nach Anspruch 3 mit einem Dämpfungsglied kombiniert werden, um so das Aufeinanderschlagen der Zahnflanken zu dämpfen.

Ausführungsbeispiele von Vorrichtungen zur Durchführung des erfindungsgemäßen Verfahrens sind an Hand von Zeichnungen dargestellt. Es zeigt:
- Fig. 1: einen Luftpresser mit Riemenscheibe für Nebenantriebe
- Fig. 2: einen Luftpresser mit Hydraulikpumpe und Riemenscheibe für Nebenantriebe

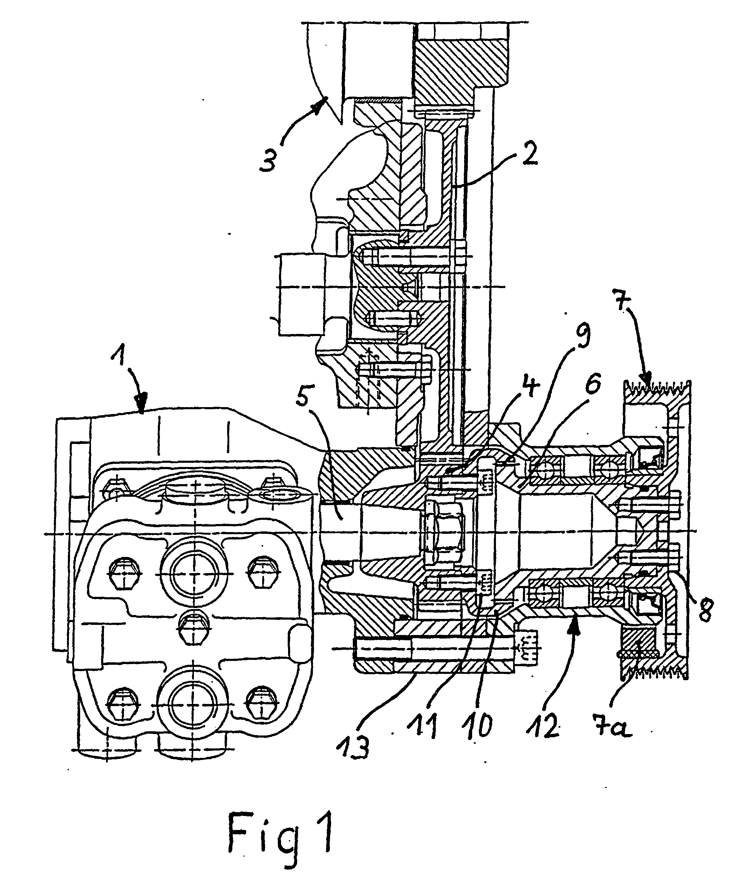

Ein Kolbenluftpresser 1 wird nach Fig. 1 über ein Nockenwellenzahnrad 2 als Zwischenrad von einer Kurbelwelle 3 aus angetrieben. Das Nockenwellenzahnrad 2 kämmt mit einem Ritzel 4, welches drehfest mit einer Kurbelwelle 5 des Luftpressers 1 verbunden ist.

Konzentrisch zum Ritzel 4 ist erfindungsgemäß eine Welle 6 mit einer Riemenscheibe 7 angeordnet. Die Riemenscheibe 7 ist mittels Schrauben 8 drehfest mit der Welle 6 verbunden. Die Welle 6 wiederum ist über eine Verzahnung 9 und eine Zwischenscheibe 10 und Schrauben 11 drehfest mit dem Ritzel 4 verbunden.

Gelagert ist die Welle 6 in einem Gehäuse 12 welches zusammen mit dem Luftpresser 1 an eine Stirnseite 13 eines Kurbelgehäuses angeflanscht ist.

Beim Anbau der Riemenscheibe 7 wird zunächst die Zwischenscheibe 10 auf dem Ritzel 4 mit den Schrauben 11 befestigt. Anschließend erfolgt der Anbau des Gehäuses 12 mit darin gelagerten Welle 6 und darauf befestigter Riemenscheibe 7. Der Drehmomentschluß wird durch die Verzahnung 9 hergestellt.

Dadurch, daß die Riemenscheibe 7 stets mit Drehmoment von Nebenantrieben wie z.B. Lichtmaschine, Kühlmittelpumpe etc. belastet ist wird das Zahnflankenschlagen zwischen dem Ritzel 4 und dem Zwischenrad 2 zuverlässig vermieden. Im Gegensatz zur Hydraulikpumpe sind die Nebenantriebe ständig mit Drehmoment beaufschlagt.

Für den Fall, daß das Drehmoment der Riemenscheibe 7 relativ klein ist, kann diese mit einem Dämpfungsglied 7a kombiniert werden, welches das eventuell noch verbleibende Zahnflankenschlagen dämpft.

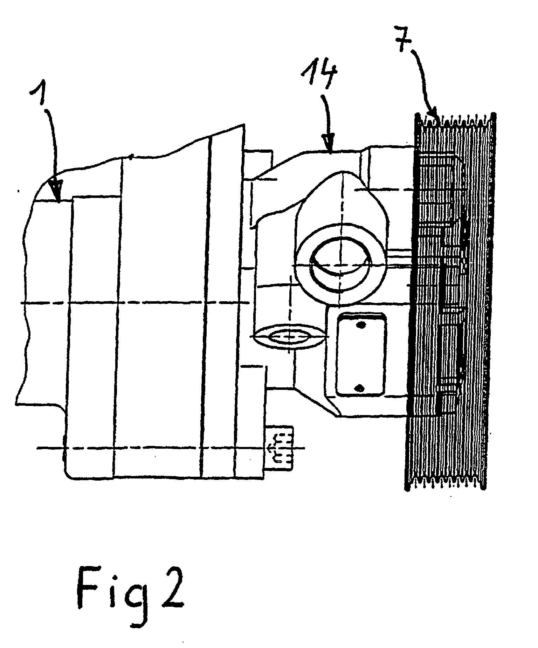

Nach Fig. 2 ist an die Kurbelwelle 5 ( Fig. 1 ) des Luftpressers 1 eine nicht näher dargestellte Spindel einer Hydraulikpumpe 14 angeschlossen. Am freien Ende dieser Spindel ist als weiterer Drehmomentabnehmer die Riemenscheibe 7 angeflanscht. Diese Ausführung hat den Vorteil, daß die Lagerung der Spindel der Hydraulikpumpe 14 genutzt werden kann. Wie unter Fig. 1 beschrieben kann auch hier die Riemenscheibe 7 ein Dämpfungsglied aufweisen.

## Patentansprüche

1. Vorrichtung zur Vermeidung von Getriebegeräuschen bei zahnradgetriebenen Luftpressern von Brennkraftmaschinen, bei dem auf einer Kurbelwelle des Luftpressers neben einem Ritzel zum Antrieb, noch ein Verbraucher in Form einer Hydraulikpumpe für eine hydraulische Lenkhilfe als Drehmomentabnehmer vorgesehen ist, **dadurch gekennzeichnet, daß** als zusätzlicher Drehmomentabnehmer eine Riemenscheibe (7) dient, daß die Lagerung einer Welle (6) der Riemenscheibe (7) in einem Gehäuse (12) erfolgt, welches konzentrisch zur Kurbelwelle (5) des Luftpressers (1) an eine Stirnseite (13) eines Kurbelgehäuses angeflanscht ist, und daß die Welle (6) mittels Verzahnung (9) und einer Zwischenscheibe (10) drehfest mit der Kurbelwelle (5) verbunden ist und daß das Drehmoment des zusätzlichen Drehmomentabnehmers möglichst konstant und während des gesamten Betriebes der Brennkraftmaschine dauerhaft vorhanden ist.

2. Vorrichtung zur Vermeidung von Getriebegeräuschen bei zahnradgetriebenen Luftpressern von Brennkraftmaschinen, bei dem auf einer Kurbelwelle des Luftpressers neben einem Ritzel zum Antrieb noch ein Verbraucher in Form einer Hydraulikpumpe für eine hydraulische Lenkhilfe als Drehmomentabnehmer vorgesehen ist, **dadurch gekennzeichnet, daß** mit der Kurbelwelle (5) des Luftpressers (1) direkt ein weiterer Drehmomentabnehmer verbunden ist, daß der Drehmomentabnehmer eine Riemenscheibe (7) ist, daß die Riemenscheibe (7) unmittelbar auf einer Spindel der Hydraulikpumpe (14) an deren freiem Ende befestigt ist, und daß das Drehmoment der Riemenscheibe möglichst konstant und während des gesamten Betriebes der Brennkraftmaschine dauerhaft vorhanden ist.

3. Vorrichtung zur Vermeidung von Getriebegeräuschen bei zahnradgetriebenen Luftpressern von Brennkraftmaschinen nach Anspruch 1 oder 2, bei dem ein Drehmomentabnehmer vorgesehen ist dessen Drehmoment möglichst konstant ist, **dadurch gekennzeichnet, daß** der Drehmomentabnehmer ein zusätzliches Dämpfungsglied (7a) aufweist.

## Claims

1. Device for preventing gear noises in gear-driven air compressors for internal combustion engines, in which device a drive pinion and a consumer provided as a torque take-up device in the form of a hydraulic pump for hydraulic power-assisted steering sit on a crankshaft of the air compressor, **characterised in that** a pulley (7) serves as an additional torque take-up device, that a shaft (6) of the pulley (7) is mounted in a housing (12) which is, concentrically to the crankshaft (5) of the air compressor (1), flanged on to a end face (13) of a crankcase, and that the shaft (6) is rigidly connected with the crankshaft (5) by means of gearing (9) and an intermediate disc (10) and that the torque of the additional torque take-up device is as constant as possible and is permanently available during the entire operation of the internal combustion engine.

2. Device for preventing gear noises in gear-driven air compressors for internal combustion engines, in which device a drive pinion and a consumer provided as a torque take-up device in the form of a hydraulic pump for hydraulic power-assisted steering sit on a crankshaft of the air compressor, **characterised in that** another torque take-up device is directly connected with the crankshaft (5) of the air compressor (1), that the torque take-up device is a pulley (7), that the pulley (7) is attached directly to the free end of a spindle of the hydraulic pump (14) and that the torque of the pulley is as constant as possible and is permanently available during the entire operation of the internal combustion engine.

3. Device for preventing gear noises in gear-driven air compressors for internal combustion engines according to Claim 1 or 2, which device is provided with a torque take-up device whose torque is as constant as possible, **characterised in that** the torque take-up device is equipped with an additional damping element (7a).

## Revendications

1. Dispositif pour éviter les bruits de transmission de compresseurs d'air entraînés par des roues dentées dans des moteurs à combustion interne, selon lequel, le vilebrequin du compresseur d'air comporte, en plus d'un pignon d'entraînement, également un consommateur sous la forme d'une pompe hydraulique d'une direction assistée comme récepteur de couple,
**caractérisé en ce qu'**
un récepteur de couple supplémentaire est constitué par une poulie à courroie (7),
le montage de l'arbre (6) de la poulie à courroie (7) se fait dans un boitier (12) concentrique au vilebrequin (5) du compresseur d'air (1) fixé par bride sur une face frontale (13) d'un carter de vilebrequin, l'arbre (6) est relié par sur une denture (9) et un disque intermédiaire (10), solidairement au vilebrequin (5), et
le couple du récepteur de couple supplémentaire est aussi constant que possible et est appliqué en permanence pendant tout le fonctionnement du moteur à combustion Interne.

2. Dispositif pour éviter les bruits de transmission de compresseurs d'air entraînés par des roues dentées dans des moteurs à combustion interne selon lequel un vilebrequin du compresseur comporte non seulement un pignon pour l'entraînement mais également un consommateur sous la forme d'une pompe hydraulique pour une direction assistée comme consommateur de couple.
**caractérisé en ce qu'**
un autre consommateur de couple est relié directement au vilebrequin (5) du compresseur d'air (1),
le récepteur de couple est une poulie à courroie (7),
la poulie à courroie (7) est fixée directement à l'extrémité libre d'une broche de la pompe hydraulique (14), et
le couple de la poulie à courroie est aussi constant que possible et reste appliqué en permanence pendant tout le fonctionnement du moteur à combustion interne.

3. Dispositif pour éviter les bruits de transmission de compresseurs d'air entraînés par des roues dentées dans des moteurs à combustion interne, selon l'une quelconque des revendications 1 ou 2,
selon lequel il est prévu un récepteur de couple dont le couple est aussi constant que possible,
**caractérisé en ce que**
le récepteur de couple comporte un élément amortisseur supplémentaire (7a).
